# EUROPÄISCHE PATENTSCHRIFT

(11) **EP 2 033 830 B1**
(45) Veröffentlichungstag und Bekanntmachung des Hinweises auf die Patenterteilung: **08.08.2012**
(21) Anmeldenummer: 08015538.5
(22) Anmeldetag: 03.09.2008
(51) Int. Cl.: B60K 35/00

(54) **Energieflussanzeige für Hybridfahrzeuge**
Energy flow display for hybrid automobiles
Signalisation d'écoulement d'énergie pour véhicules hybrides

(30) Priorität: 06.09.2007 DE 102007042267
(43) Veröffentlichungstag der Anmeldung: 11.03.2009
(73) Patentinhaber: Volkswagen Aktiengesellschaft, 38440 Wolfsburg (DE)
(72) Erfinder: Hofmann, Gustav, 38114 Braunschweig (DE); Dehmann, Rainer, 10963 Berlin (DE); Wagner, Volkmar, 10965 Berlin (DE); Pollex Alf, 38300 Wolfenbüttel (DE); Fabian Thomas, 31139 Hildesheim (DE); Geissler Jens, 38102 Braunschweig (DE)
(74) Vertreter: Banzer, Hans-Jörg

(56) Entgegenhaltungen:
- WO-A1-2006/001809
- JP-A- 2001 231 109
- JP-A- 2002 247 706
- JP-A- 2007 050 889

## Beschreibung

Die Erfindung betrifft eine Vorrichtung und ein Verfahren für eine Anzeige für den Einsatz in Fahrzeugen insbesondere für eine Darstellung unterschiedlicher Energieflüsse in Fahrzeugen mit mehreren Antrieben.

Die Anzeigevorrichtung stellt die wesentlichen Komponenten eines Hybridfahrzeugs dar und beinhaltet diese charakterisierende Symbole für mindestens eine elektrische Maschine, eine Einrichtung zur Speicherung von Energie, insbesondere elektrischer Energie, einen Verbrennungsmotor und angetriebene Räder des Hybridfahrzeugs.

Da das Zusammenwirken der einzelnen Komponenten aus Komfortgründen für einen Fahrer nicht spürbar ausgelegt ist, wird eine Energieflussanzeige benötigt. Die Visualisierung der Energieflüsse, insbesondere von Betriebszuständen, erfolgt durch die Darstellung der Energieflüsse zwischen Energie abgebenden und Energie aufnehmenden Komponenten. Hiermit soll einem Fahrer die Möglichkeit gegeben werden, neben der Information über die Betriebszustände des Hybridfahrzeugs auch Rückschlüsse auf die Fahrweise zu ziehen, um das Hybridfahrzeug in optimalen Fahrzuständen zu bewegen.

Aus der WO 20061001809 ist eine Anzeigeeinrichtung bekannt, bei der Fahrzeugkomponenten als Ikonen dargestellt sind. Zwischen diesen Komponenten werden sowohl eine Richtung als auch eine Intensität der Energieübertragung durch Leistungsflussindikatoren dargestellt. Grundsätzlich erfolgt eine gleichzeitige Darstellung der Richtung und der Höhe der Energieflüsse über Pfeile. Die Richtung des Energieflusses wird durch die Pfeilspitze, die auf die Energie aufnehmende Komponente gerichtet ist, dargestellt. Die Höhe des Energieflusses wird durch die Breite des Pfeils dargestellt.

Durch die gleichzeitige Darstellung von Richtung und Intensität der einzelnen Energieflüsse werden einem Fahrer viele Informationen geboten, jedoch besteht hierbei auch eine hohe Gefahr der Ablenkung vom Verkehrsgeschehen. Darüber hinaus leidet durch eine verschachtelte Anordnung der Komponenten die Übersichtlichkeit, was für einen Fahrer eine längere Eingewöhnungszeit erfordert, um die Informationen aus der Anzeige richtig zu deuten.

Die Druckschrift JP 2007-050889 A beinhaltet die Merkmale des Oberbegriffs des Ansprüche 1 und 17 und betrifft eine Fahrstatusanzeigevorrichtung eines Hybridfahrzeugs. Auf einem Anzeigemittel zeigen Pfeile den Energiefluss zwischen einer Maschine und Vorderrädern, zwischen der Maschine und einem Frontmotor, zwischen dem Frontmotor und den Vorderrädern, zwischen dem Frontmotor und einer Batterie, zwischen einem hinteren Motor und der Batterie und zwischen dem hinteren Motor und hinteren Rädern in Farben in einem Zweiradantriebsstatus, einem Vierradantriebsstatus und einem Energieregenerationsstatus an.

Die JP 2001-231109 A betrifft eine Fahrzeugzustandsanzeigevorrichtung. Wenn eine elektronische Hybridsteuereinheit einen Anzeigesteuerschaltkreis anweist, eine Anzeige darzustellen, welche einer Maschinenfahrbewegungsbetriebsart entspricht, beleuchtet der Anzeigesteuerschaltkreis einen Bereich, welcher die Maschine als die Quelle der Antriebskraft darstellt, und lässt den Bereich, welcher eine Antriebswelle darstellt, den Bereich, welcher eine Achse darstellt, und den Bereich, welcher Räder darstellt, in der Richtung der übertragenen Energie aufblinken. Zu diesem Zeitpunkt sind der Bereich, welcher einen Antriebsmotor darstellt, der Bereich, welcher die Kraftstoffzelle darstellt, und der Bereich, welcher eine Batterie darstellt, ausgeschaltet.

Die Aufgabe der vorliegenden Erfindung ist, eine Anzeigevorrichtung und ein Verfahren für eine Energieflussanzeige für Hybridfahrzeuge bereitzustellen, die eine schnelle Vermittlung der augenblicklichen Betriebszustände, in denen sich das Fahrzeug befindet, für einen Fahrer bereitstellen, damit diese Informationen von ihm intuitiv verarbeitet werden können.

Diese Aufgabe wird erfindungsgemäß durch eine Anzeigevorrichtung nach Anspruch 1 und ein Verfahren zur Anzeige in einem Fahrzeug nach Anspruch 17 gelöst. Die abhängigen Ansprüche definieren bevorzugte und vorteilhafte Ausführungsformen der Erfindung.

Erfindungsgemäß ist vorgesehen, dass die Anzeigevorrichtung die Energieübertragungswege zwischen den Komponenten in einer im Wesentlichen symmetrischen Anordnung darstellt. Vorteilhaft ist hierbei eine Übersichtlichkeit dadurch gegeben, dass in einem Ausgangszustand die möglichen Energieübertragungswege zwischen Energie abgebenden und Energie aufnehmenden Komponenten darstellbar oder dargestellt sind.

In einer weiteren vorteilhaften Ausgestaltung werden die Energieflüsse für die verschiedenen Betriebszustände dargestellt. Neben dem Betriebszustand für ausschließliches elektrisches Fahren nur mit dem elektromotorischen Antrieb, wird der Zustand für das Fahren mit dem Verbrennungsmotor sowie die Kombination aus elektromotorischen und verbrennungsmotorischen Antrieb angezeigt. Im Schubbetrieb werden die Energieflüsse für eine Rückgewinnung von kinetischer in elektrische Energie über eine als Generator betriebene elektrische Maschine dargestellt.

Die übersichtliche Darstellung der Energieflüsse erfolgt in vorteilhafter Weise durch parallel verlaufende, transparente Energieschläuche, die die Energieübertragungswege zwischen Energie abgebenden und Energie aufnehmenden Komponenten darstellen.

In vorteilhafter Weise wird die Richtung der Energieübertragung im transparenten Energieschlauch durch einen Energiepfeil veranschaulicht, der von einer Energiequelle zu einer Energiesenke verläuft. Um den Verlauf homogen erfolgen zu lassen, wird der Pfeil, ausgehend von der Energiequelle auf dem Weg zur Energiesenke immer länger. Die Pfeilgeschwindigkeit wird so eingestellt, dass trotz unterschiedlich langer Übertragungswege die Pfeilspitzen zum gleichen Zeitpunkt bei der Energiequelle starten und nach einer Zeitverzögerung gleichzeitig bei der Energiesenke ankommen.

In weiterer vorteilhafter Weise wird der Pfeil in seiner ganzen Länge ausgeblendet, sobald die Pfeilspitze die Energiesenke erreicht hat. Nach kurzer Ausblendzeit, also der Darstellung der Ruheposition, wird der Pfeil wieder neu aufgebaut, indem er wieder von der Energiequelle startet. Die zeitliche Abfolge für eine Einblendung des Pfeils, seinem Aufbau und seiner Ausblendung wird dabei so gewählt, dass sich ein insgesamt harmonischer Aufbau und Abbau ergibt.

In den Energieschläuchen bewegen sich mehrere kleine Pfeile in Energieflussrichtung von der Energiequelle zu der Energiesenke . Die Pfeile weisen in Abhängigkeit der übertragenen Energieart, wie z.B. mechanische Energie oder elektrische Energie, unterschiedliche Farben auf. Durch diese animierte Darstellung kann der Energiefluss sehr übersichtlich dargestellt werden.

In vorteilhafter Weise wird der Betriebszustand für rein elektrisches Fahren ohne verbrennungsmotorischen Antrieb so dargestellt, dass der Pfeil ausgehend vom elektrischen Speicher im transparenten Energieschlauch zur elektrischen Maschine, die für diese Betriebsart als Elektromotor funktioniert, verläuft. Vom Elektromotor verzweigen dann, in Abhängigkeit von der Anzahl der angetriebenen Achsen, zwei bzw. vier Energiepfeile zu den Antriebsrädern. Für den Betriebszustand für rein verbrennungsmotorisches Fahren ohne elektromotorischen Antrieb verläuft der Energiepfeil von der Verbrennungskraftmaschine über die transparenten Energieschläuche zu den Antriebsrädern.

Vorteilhaft erfolgt die Anzeige für den Ladevorgang eines Energiespeichers durch den Energiepfeil von der Verbrennungskraftmaschine über die elektrische Maschine, die in diesem Betriebszustand als Generator funktioniert, zum Energiespeicher. Dieser Betriebszustand wird neben dem Fahrbetrieb immer dann automatisch eingestellt, wenn der Ladezustand des Energiespeichers ein Minimalmaß aufweist. Neben der Belastung im Fahrbetrieb kann im stehenden Betrieb der Ladezustand beispielsweise durch angeschaltete Verbraucher einen Minimalwert unterschreiten. Der Energiespeicher ist in erster Linie als elektrischer Energiespeicher ausgelegt, insbesondere als Batterie, die ausgehend von der

Verbrennungskraftmaschine über die elektrische Maschine, die in diesem Betriebszustand als elektrischer Generator funktioniert, geladen wird. Bei dem elektrischen Energiespeicher kann es sich aber auch um einen Kondensator handeln. Neben elektrischen Energiespeichern ist auch eine Verwendung von mechanischen Energiespeichern, insbesondere kinetische Energiespeicher, denkbar. In dieser Betriebsart würde die elektrische Maschine als Kupplung dienen, um die mechanische Energie der Verbrennungskraftmaschine zum mechanischen Energiespeicher zu übertragen.

In einer weiteren vorteilhaften Ausbildung der Erfindung wird der Hybridbetrieb, also der gemeinsame Betrieb von elektromotorischem und verbrennungsmotorischem Antrieb dargestellt. Dabei verlaufen die Energiepfeile vom Verbrennungsmotor, und vom Energiespeicher über die elektrische Maschine, die in diesem Betriebszustand als Elektromotor funktioniert, parallel zu den Antriebsrädern. Dieser Betriebszustand wird beispielsweise dann automatisch eingestellt, wenn für das Fahrzeug bei Beschleunigung oder an Steigungen erhöhte Leistung gebraucht wird.
In vorteilhafter Ausgestaltung der Erfindung wird eine Rückgewinnung von Energie für den Energiespeicher bei einer Verzögerung des Fahrzeugs, beispielsweise beim Bremsen, die auch als Rekuperation bezeichnet wird, in zweistufiger Ausführung dargestellt. Ausgehend von den Antriebsrädern verlaufen die Energiepfeile von den Antriebsrädern zur elektrischen Maschine, die für diese Betriebsart als Generator geschaltet ist. Sobald die Pfeilspitzen, ausgehend von den Fahrzeugrädern, das Symbol der elektrischen Maschine erreicht haben, werden die Energiepfeile ausgeblendet und werden danach in einem Energiepfeil weitergeleitet, der sich von der elektrischen Maschine zum Energiespeicher bewegt. Neben der Aufladung eines elektrochemischen Speichers, insbesondere einer Batterie, ist auch die Aufladung eines Kondensators denkbar. Bei Verwendung eines mechanischen Energie-Speichers, insbesondere eines kinetischen Speichers, würde die elektrische Maschine, als Kupplung eingesetzt, und die kinetische Energie der Antriebsräder auf den kinetischen Energiespeicher übertragen.
Ein weiterer wesentlicher Vorteil der Erfindung zur Steigerung der Übersichtlichkeit ist die Verwendung von Farben, die zur anschaulichen Unterscheidung bei der Darstellung der Betriebszustände Verwendung finden.
Neben der Verwendung von Farben, die einzelnen Betriebszuständen zugeordnet sind, kann die Betriebsart auch als farbiger Schriftzug oder einfarbiger Schriftzug in einem farbigen Rahmen dargestellt werden.
In vorteilhafter Weise wird die Übersichtlichkeit der Energieverläufe dadurch gesteigert, dass die Energiepfeile ebenfalls mit unterschiedlichen Farben darstellbar sind. Dabei wird den Energiepfeilen von der Verbrennungskraftmaschine zu den Antriebsrädern eine Farbe zugeordnet, beispielsweise Orange. Die Energiepfeile zwischen Energiespeicher und elektrischer Maschine beziehungsweise über die elektrische Maschine zu den Antriebsrädern werden in einer anderen Farbe dargestellt, insbesondere blau. Für den Zustand der Energierückgewinnung werden die Energiepfeile für den Verlauf von den Antriebsrädern zur elektrischen Maschine in einer weiteren anderen Farbe ausgelegt, beispielsweise grün.

Die Figuren veranschaulichen Ausführungsformen der Erfindung der Anzeigevorrichtung für verschiedene Betriebszustände. Dabei zeigen:
- Fig. 1: eine Darstellung der erfindungsgemäßen Anzeigevorrichtung für den Betriebszustand stillstehendes Fahrzeug
- Fig. 2: eine Darstellung der Anzeigevorrichtung für den Betriebszustand rein elektrisches Fahren
- Fig. 3: eine Darstellung der Anzeigevorrichtung für den Betriebszustand verbrennungsmotorisches Fahren bei gleichzeitiger Ladung des Energiespeichers
- Fig. 4: eine Darstellung der Anzeigevorrichtung für den Betriebszustand Hybridbetrieb mit verbrennungsmotorischen und elektrischem Antrieb
- Fig. 5: eine Darstellung der Anzeigevorrichtung für den Betriebszustand Rückgewinnung von Energie
- Fig. 6: eine Darstellung der Anzeigevorrichtung für Energiebilanzierung
- Fig. 7: eine Darstellung der Anzeigevorrichtung für Wegstrecken-Computer und
- Fig. 8: eine Darstellung der Anzeigevorrichtung für farbige Darstellung des Betriebszustands.
- Fig. 9: eine Darstellung der Anzeigevorrichtung für den Betriebszustand Ladung des Energiespeichers mit Hilfe des Verbrennungsmotors bei stehendem, rollendem oder abgestelltem Fahrzeug.
- Fig. 10: eine Darstellung einer weiteren erfindungsgemäßen Anzeigevorrichtung für den Betriebszustand stillstehendes Fahrzeug
- Fig. 11: eine Darstellung der Anzeigevorrichtung der Figur 10 für den Betriebszustand rein elektrisches Fahren
- Fig. 12: eine Darstellung der Anzeigevorrichtung der Figur 10 für den Betriebszustand verbrennungsmotorisches Fahren bei gleichzeitiger Ladung des Energiespeichers
- Fig. 13: eine Darstellung der Anzeigevorrichtung der Figur 10 für den Betriebszustand Hybridbetrieb mit verbrennungsmotorischen und elektrischem Antrieb
- Fig. 14: eine Darstellung der Anzeigevorrichtung der Figur 10 für den Betriebszustand Rückgewinnung von Energie
- Fig. 15: eine Darstellung der Anzeigevorrichtung der Figur 10 für den Betriebszustand Ladung des Energiespeichers mit Hilfe des Verbrennungsmotors bei stehendem, rollendem oder abgestelltem Fahrzeug.

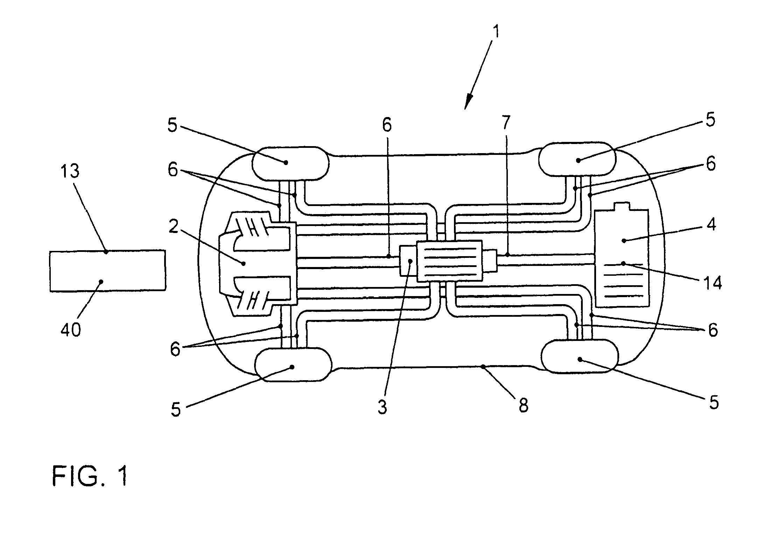

Die Figuren 1 bis 5 und 9 zeigen eine erfindungsgemäße Anzeigevorrichtung 1 und die für den Antrieb wesentlichen Komponenten 2, 3, 4, 5 symbolhaft und in einer symmetrischen Anordnung als Aufsicht auf ein Fahrwerk eines Fahrzeugs.
Die Figur 1 zeigt eine erfindungsgemäße Anzeigevorrichtung 1, die eine Betriebszustands-Anzeige 13 bei Stillstand 40, also für ein nicht bewegtes Fahrzeug, darstellt. In dieser Darstellung befinden sich alle Komponenten 2, 3, 4, 5 in einem nicht aktiven Zustand. Im Energiespeicher 4 wird der Ladezustand 14 durch die Höhe des Stapels ersichtlich, die proportional zum Ladezustand 14 ist. Die transparenten Energieschläuche 6, 7 veranschaulichen die möglichen Übertragungswege für die Energieflüsse. Die
Betriebszustands-Anzeige 13 ist ohne Schriftzug. In der Grunddarstellung ist ein Vierradantrieb dargestellt. Grundsätzlich lässt sich diese Anzeigevorrichtung 1 aber auch bei Antriebskonfigurationen verwenden, bei denen nur eine Achse angetrieben ist oder der Verbrennungsmotor 2 und die elektrische Maschine 3 getrennte Achsen antreiben. In diesen Fällen werden nur die Energieschläuche 6, 7 dargestellt, in denen ein Energiefluss auf die entsprechende Achse übertragen wird. Die Umrisse des Fahrzeugs werden durch die Fahrzeugkontur 8 dargestellt.

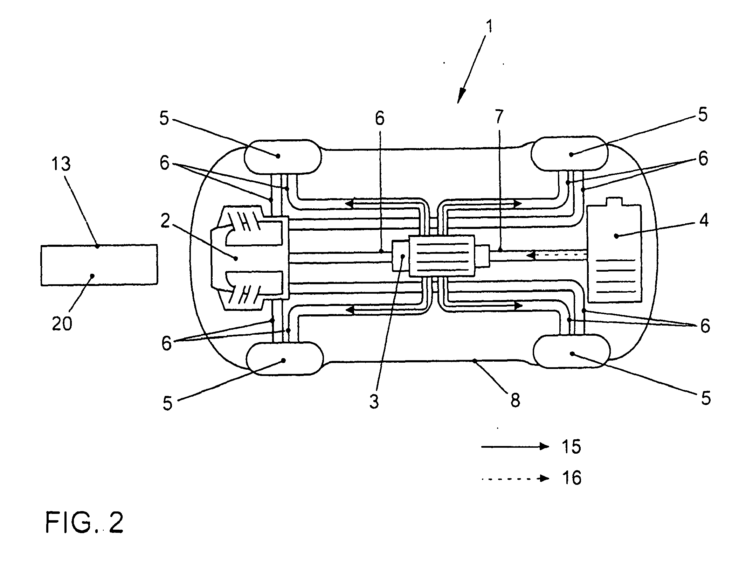

Die Figur 2 zeigt eine erfindungsgemäße Anzeigevorrichtung 1, die die Betriebszustands-Anzeige 13 für den E-Motorbetrieb (Elektromotorbetrieb) 20 und bei fahrendem Fahrzeug anzeigt. Vom Energiespeicher 4 wird der Energiefluss angezeigt, der mit dem Energiepfeil 16, der im Energieschlauch 7 zur elektrischen Maschine 3, die in dieser Betriebsart als Elektromotor betrieben wird, verläuft. Von hier verzweigen die Energiepfeile 15 in den Energieschläuchen 6 zu den Fahrzeugrädern 5. In der Betriebszustands-Anzeige 13 erscheint ein diesen Betrieb charakterisierender Schriftzug, beispielsweise der Schriftzug "Elektro-Motor". Bei fortschreitender Fahrt reduziert sich der Ladezustand 14 des Energiespeichers 4, der durch eine Verringerung der Höhe des Stapels im Energiespeicher 4 angezeigt wird. Für den Fall eines Stopps des Fahrzeugs werden die Energiepfeile 16 und der Schriftzug "Elektro-Motor" ausgeblendet. Die Anzeigevorrichtung 1 zeigt nunmehr die gleiche Betriebszustands-Anzeige 13, die bereits in Figur 1 beschrieben ist.

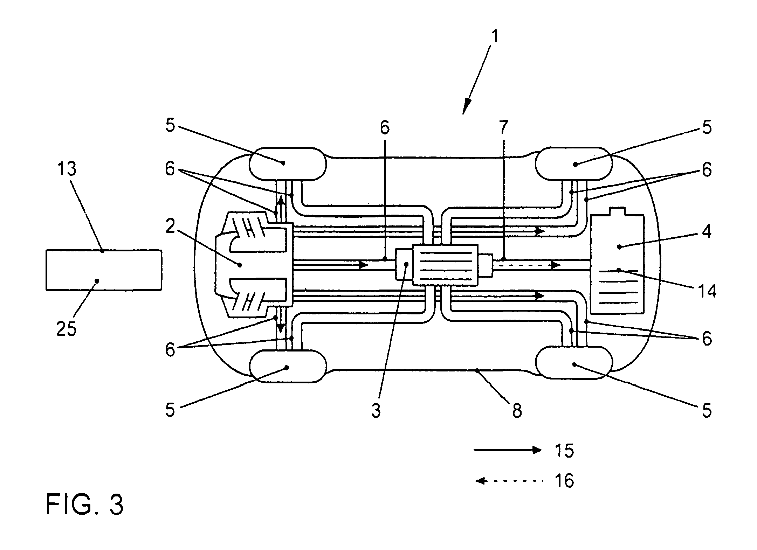

Die Figur 3 zeigt eine erfindungsgemäße Anzeigevorrichtung 1, bei der die Betriebszustands-Anzeige 13 den Verbrennungsmotor-Betrieb 25 bei fahrendem Fahrzeug anzeigt. Dies entspricht dem Betriebszustand von Fahrzeugen mit konventionellem Antrieb, also mit einem Verbrennungsmotor 2. Vom Verbrennungsmotor 2 verlaufen die Energiepfeile 15 im Energieschlauch 6 zu den Fahrzeugrädern 5. Zusätzlich ist in dieser Betriebsart hier der
Energiepfeil 15 dargestellt, der vom Verbrennungsmotor 2 zur elektrischen Maschine 3, die für diesen Betriebszustand als Generator geschaltet ist, verläuft. Nach Umwandlung von mechanischer in elektrische Energie in der elektrischen Maschine 3 verläuft der Energiepfeil 16 im Energieschlauch 7 zum Energiespeicher 4. Mit zunehmender Ladezeit erhöht sich der Ladezustand 14 im Energiespeicher 4. In der Betriebszustands-Anzeige 13 wird ein diesen Betriebszustand charakterisierender Schriftzug eingeblendet, beispielsweise der Schriftzug "Verbrennungs-Motor". Für den Fall, dass das Fahrzeug nicht mehr fährt, sondern steht, werden die Energiepfeile 15, 16 und der Schriftzug "Verbrennungs-Motor" ausgeblendet, wenn der Ladezustand 14 des Energiespeichers 4 ausreichend ist. Sollte der Ladezustand 14 nicht ausreichend sein, bleibt der Schriftzug "Verbrennungs-Motor" eingeblendet, und die Energiepfeile 15, 16 verlaufen vom Verbrennungsmotor 2 über die elektrische Maschine 3 zum Energiespeicher 4. Diese Betriebszustands-Anzeige 13 wird bei stillstehendem Fahrzeug solange aufrecht gehalten, bis der Ladezustand 14 einen bestimmten Wert erreicht.

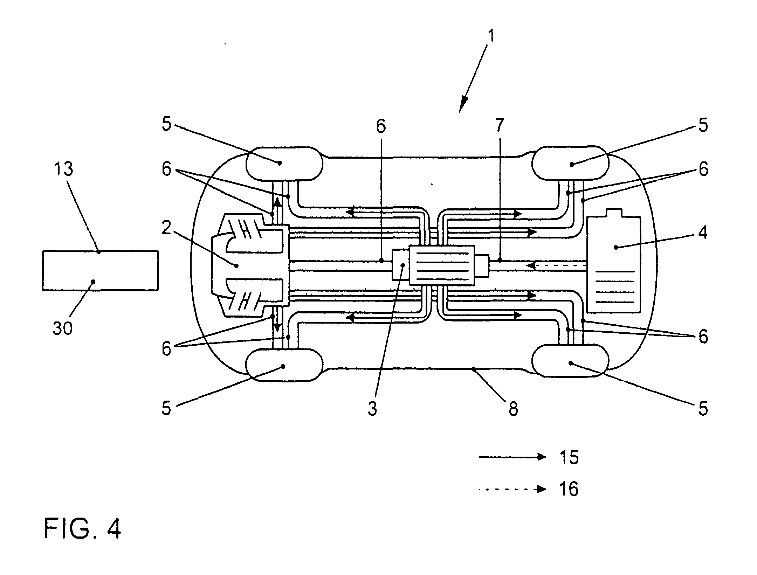

Die Figur 4 zeigt eine erfindungsgemäße Anzeigevorrichtung 1 mit der Betriebszustands-Anzeige 13 für Hybridbetrieb 30, also der Kombination aus elektrischer Maschine 3 und Verbrennungsmotor 2 bei fahrendem Fahrzeug. Dieser Betriebszustand wird automatisch eingestellt, wenn das Fahrzeug ein hohes Drehmoment benötigt, beispielsweise beim Beschleunigen oder an Steigungen. Die Energiepfeile 15 verlaufen vom Verbrennungsmotor 2 zu den Fahrzeugrädern 5. Parallel verläuft der Energiepfeil 16 vom Energiespeicher 4 zur elektrischen Maschine 3, die als Elektromotor funktioniert; anschließend verlaufen die Energiepfeile 15 von der elektrischen Maschine 3 zu den Fahrzeugrädern 5.

In der Betriebszustands-Anzeige 13 wird ein diesen Betriebszustand charakterisierender Schriftzug eingeblendet, beispielsweise erscheint der Schriftzug "Elektro-Motor & Verbrennungs-Motor".

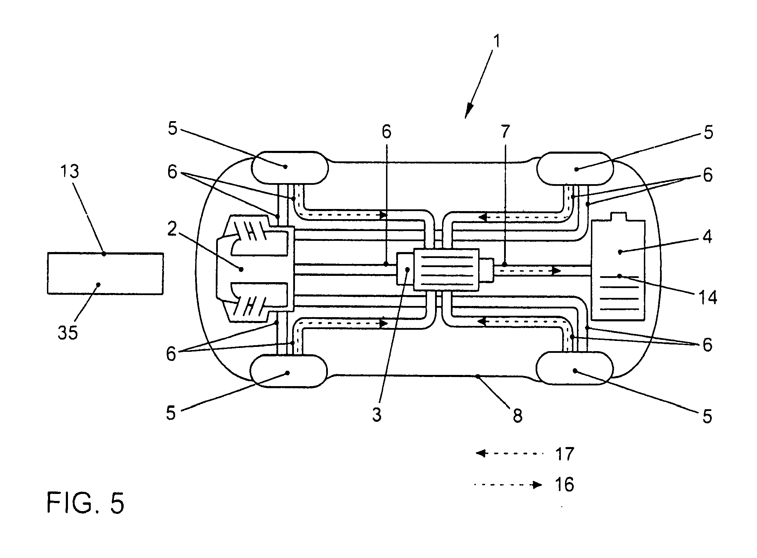

Die Figur 5 zeigt eine erfindungsgemäße Anzeigevorrichtung 1 mit der Betriebszustands-Anzeige 13 für Rekuperation 35, der Rückgewinnung von Bremsenergie, beispielsweise bei Nutzung eines Schubbetriebs des Fahrzeugs zur Ladung des Energiespeichers 4. In diesem Betriebszustand verlaufen die Energiepfeile 17 von den Fahrzeugrädern 5 zur elektrischen Maschine 3, die als Generator ausgelegt ist. Nach Umwandlung von mechanischer in elektrische Energie in der elektrischen Maschine 3 verläuft der Energiepfeil 16 zum Energiespeicher 4. Längere und/oder häufige Fahrten in diesem Betriebszustand lassen den Ladezustand 14 ansteigen, was durch eine Erhöhung des Stapels im Energiespeicher 4 ersichtlich wird. In der Betriebszustands-Anzeige 13 wird ein diesen Betriebszustand charakterisierender Schriftzug eingeblendet, beispielsweise erscheint der Schriftzug "Ladung".

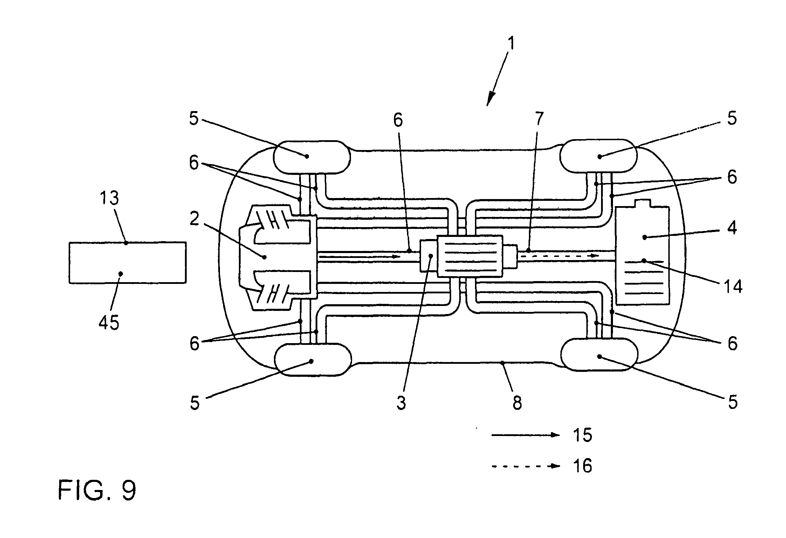

Die Figur 9 zeigt eine erfindungsgemäße Anzeigevorrichtung 1, bei der die Betriebszustands-Anzeige 13 den Betrieb 45 bei rollendem, stehenden oder abgestelltem Fahrzeug anzeigt, wobei der Verbrennungsmotor 2 läuft, um den Energiespeicher 4 zu laden. Vom Verbrennungsmotor 2 verläuft der Energiepfeil 15 im Energieschlauch 6 zur elektrischen Maschine 3, die für diesen Betriebszustand als Generator geschaltet ist. Nach Umwandlung von mechanischer in elektrische Energie in der elektrischen Maschine 3 verläuft der Energiepfeil 16 im Energieschlauch 7 zum Energiespeicher 4. Mit zunehmender Ladezeit erhöht sich der Ladezustand 14 im Energiespeicher 4. Diese Betriebszustands-Anzeige 13 wird bei stillstehendem Fahrzeug solange aufrecht gehalten, bis der Ladezustand 14 einen bestimmten Wert erreicht.

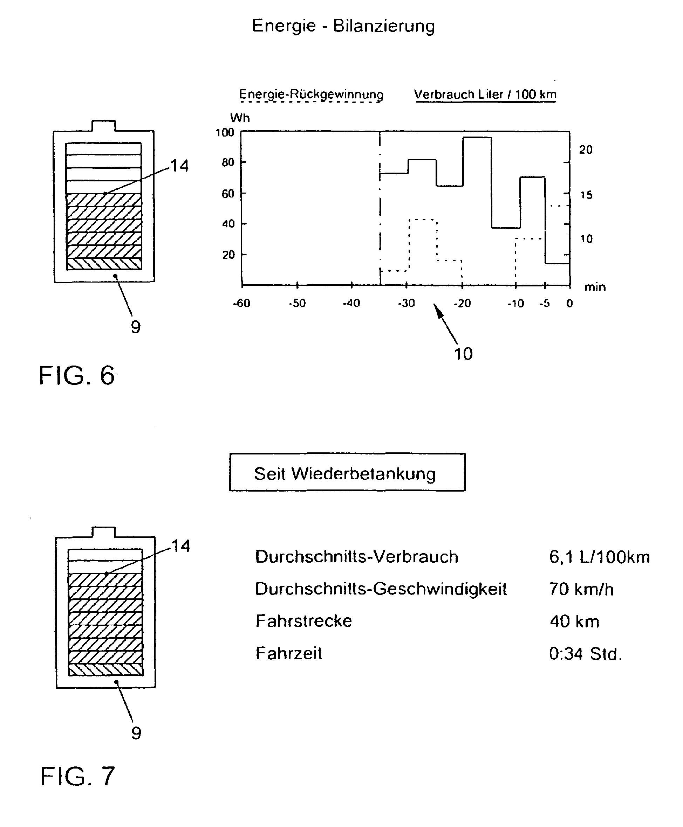

Die Figur 6 stellt neben dem Batterie-Symbol 9 für die Anzeige eines Ladezustands 14 des Energiespeichers 4 auch eine Energie-Bilanz Grafik 10 dar, in der verbrauchte Energie durch den Fahrtbetrieb und rekuperierte Energie durch zurück gewonnene Energie, beispielsweise beim Bremsen, in Form eines Balkendiagramms dargestellt werden. Die Dimension für die verbrauchte Energie wird als zurückgelegte Wegstrecke pro Kraftstoffeinheit oder aber auch als Kraftstoffverbrauch pro fest gelegter Fahrtstrecke angegeben. Die Dimension für rekuperierte Energie wird in Wattstunden angegeben. Die Energie-Bilanz Grafik 10 umfasst einen Zeitraum von maximal 120 Minuten, minimal 30 Minuten und vorzugsweise 60 Minuten, der in 6 bis 24 Unterabschnitte unterteilt ist. Die rekuperierte Energie wird über einen Zeitraum von vorzugsweise 5 Minuten addiert und die entsprechende Höhe in der Grafik eingetragen. Nach einer Taktung von 5 Minuten erfolgt ein Schiebeeffekt des Balkendiagramms um 5 Minuten von rechts nach links, wobei die zuletzt gültigen Werte für verbrauchte und zurück gewonnene Energie im rechten Teil der Grafik im Bereich Null bis Minus 5 Minuten abgebildet werden. Werte, die älter als 120 Minuten bis 30 Minuten, vorzugsweise 60 Minuten sind, werden verworfen und nicht mehr dargestellt. Nach Ausschalten einer Betriebsbereitschaft des Fahrzeugs bleiben die errechneten Werte noch 120 Minuten gespeichert und werden danach gelöscht. Bei Betätigung einer hier nicht dargestellten Reset-Taste, werden die errechneten Werte gelöscht.

Die Figur 7 zeigt die Daten eines Wegstrecken-Computers in der Darstellung "seit Wiederbetankung", die durch eine nicht dargestellte Schaltfunktion vom Fahrer eingestellt werden kann. Auch hier wird, wie in Figur 6 beschrieben, neben der Darstellung der errechneten Werte im Batterie-Symbol 9 der Ladezustand 14 des Energiespeichers 4 angezeigt. Neben den Texten und den Werten für "Durchschnitts-Verbrauch" und "Durchschnitts-Geschwindigkeit" werden Texte und Werte für "gefahrene Fahrstrecke" sowie für "verstrichene Fahrzeit" angezeigt. Mit einer hier nicht dargestellten Schaltfunktion können vom Fahrer neben der Darstellung "seit Wiederbetankung" auch weitere, hier nicht weiter ausgeführte Einstellungen vorgenommen werden. Beispielsweise kann eine Darstellung "seit Start" oder "Langzeit" ausgewählt werden.

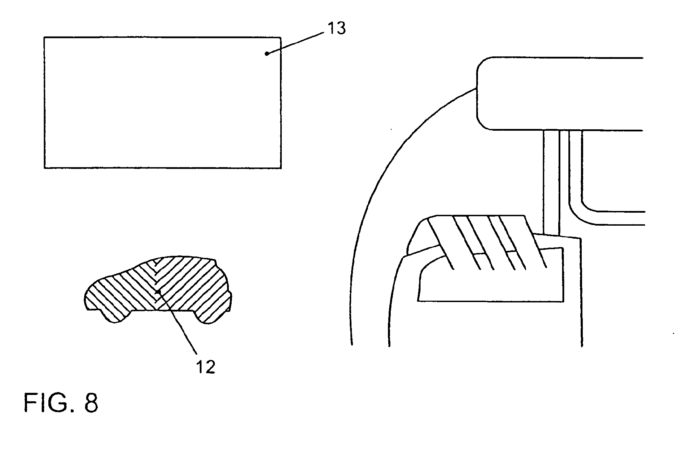

Die Figur 8 zeigt einen Ausschnitt aus einem Teilbereich der Figuren 1 bis 5. Hier wird neben der Betriebszustands-Anzeige 13, die in Form eines den jeweiligen Betriebszustand charakterisierenden Schriftzugs dargestellt ist, auch der Umriss für ein Fahrzeugsymbol 12 aus einer Seitenansicht dargestellt, das je nach Betriebszustands-Anzeige 13 farblich ausgefüllt ist. Wie im Beschreibungsteil bereits ausgeführt, werden die gleichen Farben verwendet, die für den jeweiligen Betriebszustand Anwendung finden, beispielsweise blau für E-Motorbetrieb 20, orange für Verbrennungsmotor-Betrieb 25, blau und orange für den Hybrid-Betrieb 30, der Kombination aus Verbrennungsmotor 2 und elektrischer Maschine 3, und grün für Rekuperation 35. In Figur 8 ist im Fahrzeugsymbol 12 beispielhaft der Hybridbetrieb 30 dargestellt.

Die Anzeigevorrichtung 1 kann beispielsweise im Armaturenbrett des Fahrzeugs hinter dem Lenkrad und/oder in der Mittelkonsole des Fahrzeugs, beispielsweise zusammen mit einer sogenannten Headunit eines Navigationsgeräts, angeordnet sein.

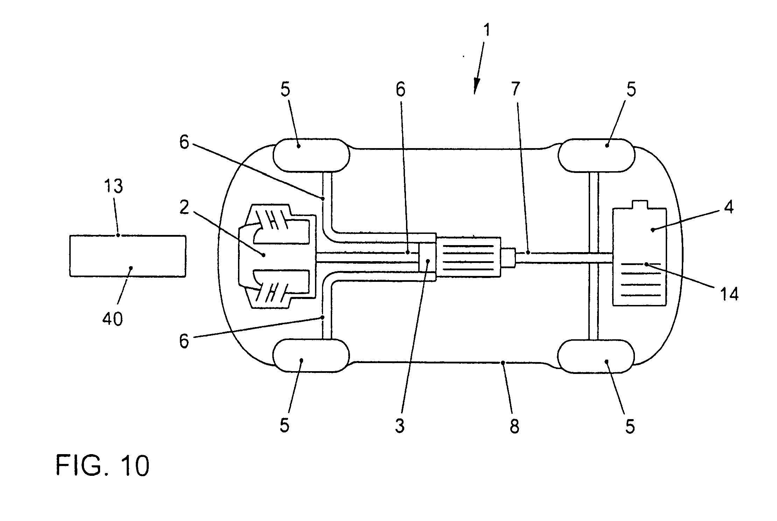

Die Figuren 10 bis 15 zeigen eine weitere erfindungsgemäße Anzeigevorrichtung 1 und die für den Antrieb wesentlichen Komponenten 2, 3, 4, 5 symbolhaft und in einer symmetrischen Anordnung als Aufsicht auf ein Fahrwerk eines Fahrzeugs.

Die Figur 10 zeigt eine erfindungsgemäße Anzeigevorrichtung 1, die eine Betriebszustands-Anzeige 13 bei Stillstand 40, also für ein nicht bewegtes Fahrzeug, darstellt. In dieser Darstellung befinden sich alle Komponenten 2, 3, 4, 5 in einem nicht aktiven Zustand. Im Energiespeicher 4 wird der Ladezustand 14 durch die Höhe des Stapels ersichtlich, die proportional zum Ladezustand 14 ist. Die transparenten Energieschläuche 6, 7 veranschaulichen die möglichen Übertragungswege für die Energieflüsse. Die Betriebszustands-Anzeige 13 ist ohne Schriftzug. In der Grunddarstellung ist ein Zweiradantrieb dargestellt. Grundsätzlich lässt sich diese Anzeigevorrichtung 1 aber auch bei Antriebskonfigurationen verwenden, bei denen zwei Achsen angetrieben sind oder der Verbrennungsmotor 2 und die elektrische Maschine 3 getrennte Achsen antreiben. In diesen Fällen werden die Energieschläuche 6, 7 dargestellt, in denen ein Energiefluss auf die entsprechende Achse übertragen wird. Die Umrisse des Fahrzeugs werden durch die Fahrzeugkontur 8 dargestellt.

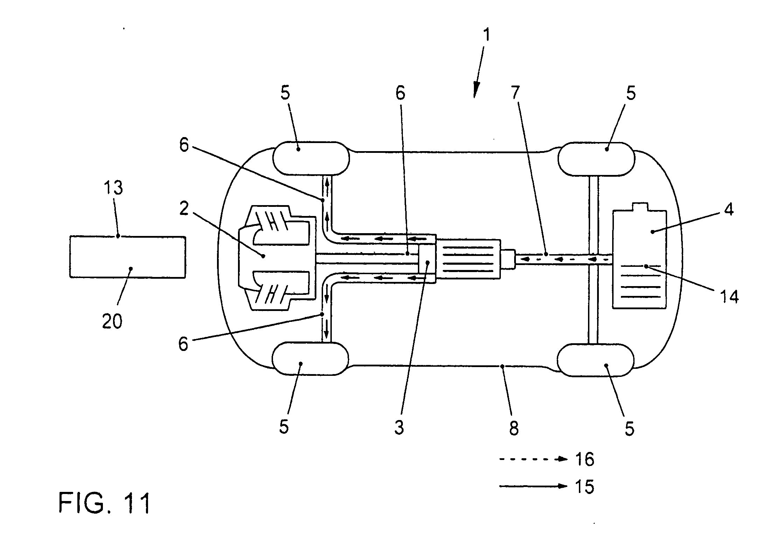

Die Figur 11 zeigt eine erfindungsgemäße Anzeigevorrichtung 1, die die Betriebszustands-Anzeige 13 für den E-Motorbetrieb (Elektromotorbetrieb) 20 und bei fahrendem Fahrzeug anzeigt. Vom Energiespeicher 4 wird der Energiefluss angezeigt, der mit dem Energiepfeil 16, der im Energieschlauch 7 zur elektrischen Maschine 3, die in dieser Betriebsart als Elektromotor betrieben wird, verläuft. Von hier verzweigen die Energiepfeile 15 in den Energieschläuchen 6 zu den Fahrzeugrädern 5. In der Betriebszustands-Anzeige 13 erscheint ein diesen Betrieb charakterisierender Schriftzug, beispielsweise der Schriftzug "Elektro-Motor". Bei fortschreitender Fahrt reduziert sich der Ladezustand 14 des Energiespeichers 4, der durch eine Verringerung der Höhe des Stapels im Energiespeicher 4 angezeigt wird. Für den Fall eines Stopps des Fahrzeugs werden die Energiepfeile 16 und der Schriftzug "Elektro-Motor" ausgeblendet. Die Anzeigevorrichtung 1 zeigt nunmehr die gleiche Betriebszustands-Anzeige 13, die bereits in Figur 10 beschrieben ist.

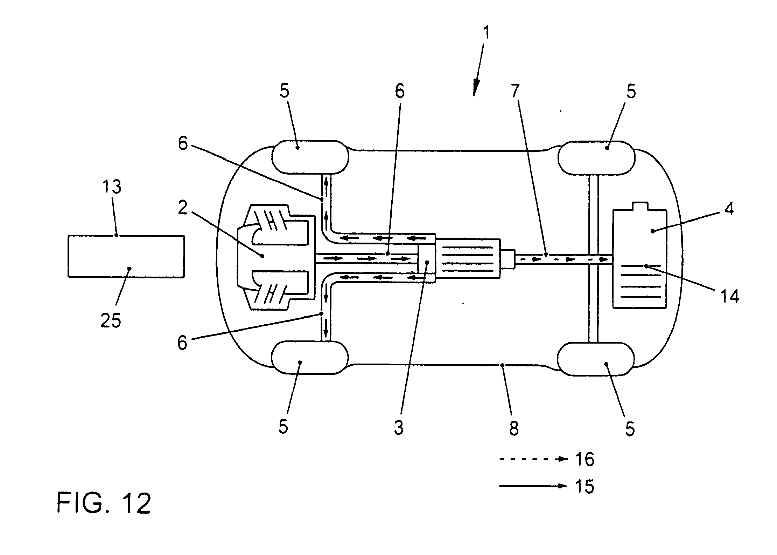

Die Figur 12 zeigt eine erfindungsgemäße Anzeigevorrichtung 1, bei der die Betriebszustands-Anzeige 13 den Verbrennungsmotor-Betrieb 25 bei fahrendem Fahrzeug anzeigt. Dies entspricht dem Betriebszustand von Fahrzeugen mit konventionellem Antrieb, also mit einem Verbrennungsmotor 2. Vom Verbrennungsmotor 2 verlaufen die Energiepfeile 15 über die elektrische Maschine 3 in Energieschläuchen 6 zu den Fahrzeugrädern 5. Zusätzlich ist in dieser Betriebsart hier der Energiepfeil 15 dargestellt, der vom Verbrennungsmotor 2 zur elektrischen Maschine 3, die für diesen Betriebszustand als Generator geschaltet ist, verläuft. Nach Umwandlung von mechanischer in elektrische Energie in der elektrischen Maschine 3 verläuft der Energiepfeil 16 im Energieschlauch 7 zum Energiespeicher 4. Mit zunehmender Ladezeit erhöht sich der Ladezustand 14 im Energiespeicher 4. In der Betriebszustands-Anzeige 13 wird ein diesen Betriebszustand charakterisierender Schriftzug eingeblendet, beispielsweise der Schriftzug "Verbrennungs-Motor". Für den Fall, dass das Fahrzeug nicht mehr fährt, sondern steht, werden die Energiepfeile 15, 16 und der Schriftzug "Verbrennungs-Motor" ausgeblendet, wenn der Ladezustand 14 des Energiespeichers 4 ausreichend ist. Sollte der Ladezustand 14 nicht ausreichend sein, bleibt der Schriftzug "Verbrennungs-Motor" eingeblendet, und die Energiepfeile 15, 16 verlaufen vom Verbrennungsmotor 2 über die elektrische Maschine 3 zum Energiespeicher 4. Diese Betriebszustands-Anzeige 13 wird bei stillstehendem Fahrzeug solange aufrecht gehalten, bis der Ladezustand 14 einen bestimmten Wert erreicht.

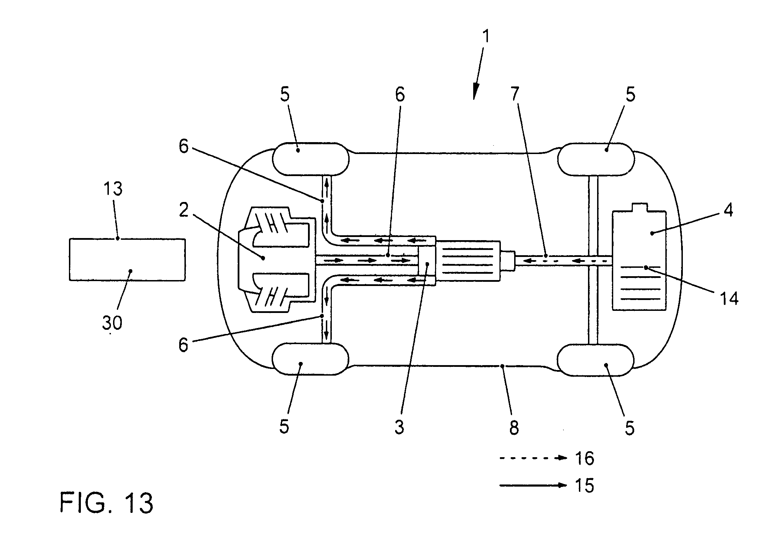

Die Figur 13 zeigt eine erfindungsgemäße Anzeigevorrichtung 1 mit der Betriebszustands-Anzeige 13 für Hybridbetrieb 30, also der Kombination aus elektrischer Maschine 3 und Verbrennungsmotor 2 bei fahrendem Fahrzeug. Dieser Betriebszustand wird automatisch eingestellt, wenn das Fahrzeug ein hohes Drehmoment benötigt, beispielsweise beim Beschleunigen oder an Steigungen. Die Energiepfeile 15 verlaufen vom Verbrennungsmotor 2 zu den Fahrzeugrädern 5. Parallel verläuft der Energiepfeil 16 vom Energiespeicher 4 zur elektrischen Maschine 3, die als Elektromotor funktioniert; anschließend verlaufen die Energiepfeile 15 von der elektrischen Maschine 3 zu den Fahrzeugrädern 5.

In der Betriebszustands-Anzeige 13 wird ein diesen Betriebszustand charakterisierender Schriftzug eingeblendet, beispielsweise erscheint der Schriftzug "Elektro-Motor & Verbrennungs-Motor".

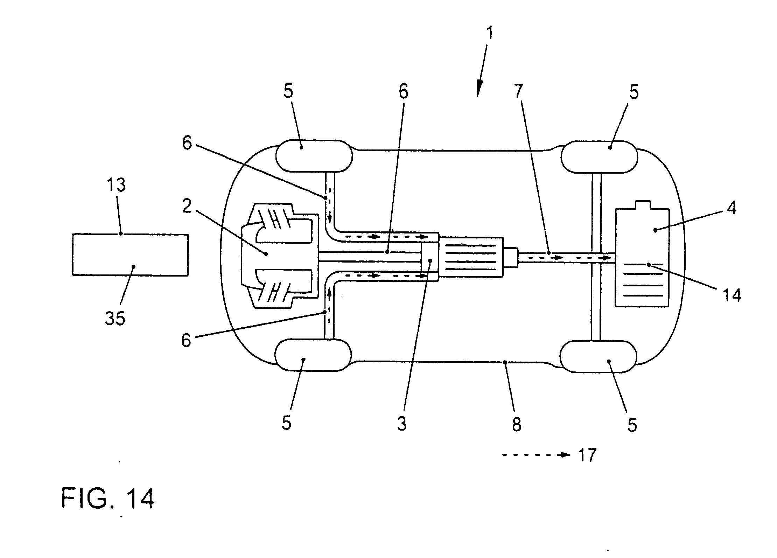

Die Figur 14 zeigt eine erfindungsgemäße Anzeigevorrichtung 1 mit der Betriebszustands-Anzeige 13 für Rekuperation 35, der Rückgewinnung von Bremsenergie, beispielsweise bei Nutzung eines Schubbetriebs des Fahrzeugs zur Ladung des Energiespeichers 4. In diesem Betriebszustand verlaufen die Energiepfeile 17 von den Fahrzeugrädern 5 zur elektrischen Maschine 3, die als Generator ausgelegt ist. Nach Umwandlung von mechanischer in elektrische Energie in der elektrischen Maschine 3 verläuft der Energiepfeil 16 zum Energiespeicher 4. Längere und/oder häufige Fahrten in diesem Betriebszustand lassen den Ladezustand 14 ansteigen, was durch eine Erhöhung des Stapels im Energiespeicher 4 ersichtlich wird. In der Betriebszustands-Anzeige 13 wird ein diesen Betriebszustand charakterisierender Schriftzug eingeblendet, beispielsweise erscheint der Schriftzug "Ladung".

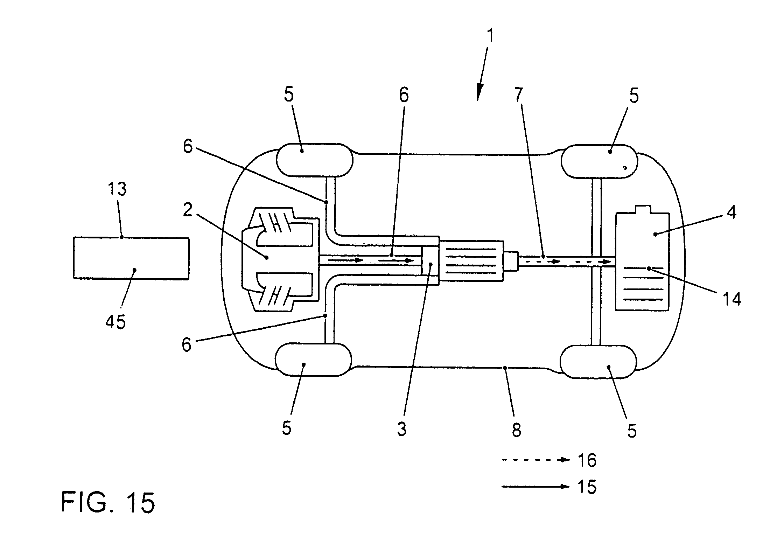

Die Figur 15 zeigt eine erfindungsgemäße Anzeigevorrichtung 1, bei der die Betriebszustands-Anzeige 13 den Betrieb 45 bei rollendem, stehenden oder abgestelltem Fahrzeug anzeigt, wobei der Verbrennungsmotor 2 läuft, um den Energiespeicher 4 zu laden. Vom Verbrennungsmotor 2 verläuft der Energiepfeil 15 im Energieschlauch 6 zur elektrischen Maschine 3, die für diesen Betriebszustand als Generator geschaltet ist. Nach Umwandlung von mechanischer in elektrische Energie in der elektrischen Maschine 3 verläuft der Energiepfeil 16 im Energieschlauch 7 zum Energiespeicher 4. Mit zunehmender Ladezeit erhöht sich der Ladezustand 14 im Energiespeicher 4. Diese Betriebszustands-Anzeige 13 wird bei stillstehendem Fahrzeug solange aufrecht gehalten, bis der Ladezustand 14 einen bestimmten Wert erreicht.

### Bezugszeichenliste

- 1: Anzeigevorrichtung
- 2: Verbrennungsmotor
- 3: Elektrische Maschine
- 4: Energiespeicher
- 5: Fahrzeugräder
- 6: Energieschlauch mechanisch
- 7: Energieschlauch elektrisch
- 8: Fahrzeugkontur
- 9: Batterie-Symbol
- 10: Energie-Bilanz Grafik
- 12: Fahrzeugsymbol
- 13: Betriebszustands-Anzeige
- 14: Ladezustand
- 15: Energiepfeil (mechanisch)
- 16: Energiepfeil (elektrisch)
- 17: Energiepfeil (rekuperativ) Betriebszustände :
- 20: E-Motorbetrieb
- 25: Verbrennungsmotor-Betrieb
- 30: Hybrid-Betrieb
- 35: Rekuperation
- 40: Stillstand
- 45: rollender, stehender oder abgestellter Betrieb des Fahrzeugs

## Patentansprüche

1. Anzeigevorrichtung (1) in einem Kraftfahrzeug, auf welcher mindestens eine elektrische Maschine (3), eine Einrichtung zur Speicherung von Energie (4), insbesondere elektrischer Energie, ein Verbrennungsmotor (2) und angetriebene Räder (5) des Kraftfahrzeugs als diese charakterisierende Symbole in mindestens einem Anzeigemodus dargestellt sind, wobei Betriebszustände (13) durch eine Darstellung der Energieübertragung (6, 7) zwischen Energie abgebenden (2, 3, 4) und Energie aufnehmenden Komponenten (4, 5) angezeigt sind,
wobei Energieübertragungswege (6, 7) zwischen den Komponenten (2, 3, 4, 5) in einer im Wesentlichen symmetrischen Anordnung dargestellt sind,
**dadurch gekennzeichnet,**
**dass** die Richtung der Energieübertragung im Energieübertragungsweg (6,7) durch mehrere von einer Energiequelle zu einer Energiesenke verlaufende animierte Pfeile (15-17) dargestellt ist, und
**dass** den animierten Pfeilen (15-17) in Abhängigkeit von einer Art der Energiequelle eine Farbe zugeordnet ist.

2. Anzeigevorrichtung (1) in einem Kraftfahrzeug nach Anspruch 1, **dadurch gekennzeichnet, dass** die Betriebszustände (13) ein elektromotorischer Antrieb, ein verbrennungsmotorischer Antrieb, ein Hybridbetrieb aus elektrischem und verbrennungsmotorischen Antrieb, eine Rückgewinnung von Bremsenergie und/oder ein Ladebetrieb des Energiespeichers (4) sind.

3. Anzeigevorrichtung (1) in einem Kraftfahrzeug nach Anspruch 1 oder 2, **dadurch gekennzeichnet, dass** die Energieübertragungswege (6, 7) zwischen Energie abgebenden (2, 3, 4) und Energie aufnehmenden Komponenten (4, 5) als parallel verlaufende, transparente Energieschläuche (6,7) dargestellt sind.

4. Anzeigevorrichtung (1) in einem Kraftfahrzeug nach einem der Ansprüche 1 bis 3, **dadurch gekennzeichnet, dass** die Richtung der Energieübertragung im transparenten Energieschlauch (6, 7) durch einen von einer Energiequelle (2, 3, 4) zu einer Energiesenke (4, 5) verlaufenden Energiepfeil mit Pfeilschaft (15, 16) mit länger werdendem Pfeilschaft dargestellt ist.

5. Anzeigevorrichtung (1) in einem Kraftfahrzeug nach Anspruch 4, **dadurch gekennzeichnet, dass** der Energiepfeil mit Pfeilschaft (15, 16) nach Erreichen der Energiesenke (4, 5) ausgeblendet ist und nach kurzer Zeit erneut von der Energiequelle (2, 3, 4) zur Energiesenke (4, 5) mit länger werdendem Pfeilschaft dargestellt ist.

6. Anzeigevorrichtung (1) in einem Kraftfahrzeug nach Anspruch 4 oder 5, **dadurch gekennzeichnet, dass** der Energiepfeil mit Pfeilschaft (15, 16) mit unterschiedlichen Farben dargestellt ist.

7. Anzeigevorrichtung (1) in einem Kraftfahrzeug nach einem der Ansprüche 1 bis 6, **dadurch gekennzeichnet, dass** für den Betriebszustand (13) Elektrisches Fahren die Richtung der Energieübertragung im transparenten Energieschlauch (6, 7) ausgehend vom Energiespeicher (4) über die elektrische Maschine (3) auf die Fahrzeugräder (5) dargestellt ist.

8. Anzeigevorrichtung (1) in einem Kraftfahrzeug nach einem der Ansprüche 1 bis 7, **dadurch gekennzeichnet, dass** für den Betriebszustand (13) Verbrennungsmotor-Betrieb (25) die Richtung der Energieübertragung im transparenten Energieschlauch (6) ausgehend vom Verbrennungsmotor (2) auf die Fahrzeugräder (5) dargestellt ist.

9. Anzeigevorrichtung (1) in einem Kraftfahrzeug nach Anspruch 8, **dadurch gekennzeichnet, dass** für den Betriebszustand (13) Verbrennungsmotor-Betrieb (25) die Richtung der Energieübertragung im transparenten Energieschlauch (6, 7) ausgehend vom Verbrennungsmotor (2) über die elektrische Maschine (3) auf den Energiespeicher (4) dargestellt ist.

10. Anzeigevorrichtung (1) in einem Kraftfahrzeug nach einem der Ansprüche 1 bis 7, **dadurch gekennzeichnet, dass** für den Betriebszustand (13) Verbrennungsmotor-Betrieb (25) die Richtung der Energieübertragung im transparenten Energieschlauch (6) ausgehend vom Verbrennungsmotor über die elektrische Maschine (3) auf die Fahrzeugräder dargestellt ist.

11. Anzeigevorrichtung (1) in einem Kraftfahrzeug nach einem der Ansprüche 1 bis 10, **dadurch gekennzeichnet, dass** für den Betriebszustand (13) Ladebetrieb (45) die Richtung der Energieübertragung im transparenten Energieschlauch (6, 7) ausgehend vom Verbrennungsmotor (2) über die elektrische Maschine (3) auf den Energiespeicher (4) dargestellt ist.

12. Anzeigevorrichtung (1) in einem Kraftfahrzeug nach einem der Ansprüche 1 bis 11, **dadurch gekennzeichnet, dass** für den Betriebszustand (13) Hybrid-Betrieb (30) die Richtung der Energieübertragung im transparenten Energieschlauch (6, 7) ausgehend vom Verbrennungsmotor (2) und vom Energiespeicher (4) über die elektrische Maschine (3) auf die Fahrzeugräder (5) dargestellt ist.

13. Anzeigevorrichtung (1) in einem Kraftfahrzeug nach einem der Ansprüche 1 bis 12,
**dadurch gekennzeichnet, dass** für den Betriebszustand (13) Rekuperation (35) die Richtung der Energieübertragung im transparenten Energieschlauch (6, 7) ausgehend von den Fahrzeugrädern (5) über die elektrische Maschine (3) auf den Energiespeicher (4) dargestellt ist.

14. Anzeigevorrichtung (1) in einem Kraftfahrzeug nach einem der Ansprüche 1 bis 13,
**dadurch gekennzeichnet, dass** den Betriebszuständen (13) unterschiedliche Farben zugeordnet sind.

15. Anzeigevorrichtung (1) in einem Kraftfahrzeug nach einem der Ansprüche 1 bis 14,
**dadurch gekennzeichnet, dass** der Betriebszustand (13) als Schriftzug dargestellt ist.

16. Anzeigevorrichtung (1) in einem Kraftfahrzeug nach einem der Ansprüche 1 bis 15, **dadurch gekennzeichnet, dass** für den Energiespeicher (4) der Ladezustand (14) angezeigt ist.

17. Verfahren zur Anzeige in einem Kraftfahrzeug, auf welcher mindestens eine elektrische Maschine (3), eine Einrichtung zur Speicherung von Energie (4), insbesondere elektrischer Energie, ein Verbrennungsmotor (2) und Fahrzeugräder (5) eines Kraftfahrzeugs als diese charakterisierende Symbole in mindestens einem Anzeigemodus (1) dargestellt werden, durch die durch eine Visualisierung der Energieübertragung zwischen Energie abgebenden (2, 3, 4) und Energie aufnehmenden Komponenten (4, 5) Betriebszustände (13) zugeordnet werden,
wobei Energieübertragungswege (6, 7) zwischen den Komponenten in einer im Wesentlichen symmetrischen Anordnung dargestellt werden,
**dadurch gekennzeichnet,**
**dass** die Richtung der Energieübertragung im Energieübertragungsweg (6,7) durch mehrere von einer Energiequelle zu einer Energiesenke verlaufende animierte Pfeile (15-17) dargestellt wird, und
**dass** den animierten Pfeilen (15-17) in Abhängigkeit von einer Art der Energiequelle eine Farbe zugeordnet wird.

18. Verfahren zur Anzeige in einem Kraftfahrzeug nach Anspruch 17,
**dadurch gekennzeichnet, dass**
die Energieübertragungswege (6, 7) zwischen Energie abgebenden (2, 3, 4) und Energie aufnehmenden Komponenten (4, 5) als parallel verlaufende, transparente Energieschläuche (6, 7) dargestellt werden.

19. Verfahren zur Anzeige in einem Kraftfahrzeug nach Anspruch 17 oder 18,
**dadurch gekennzeichnet, dass**
durch einen von einer Energiequelle (2, 3, 4) zu einer Energiesenke (4, 5) verlaufender Energiepfeil mit Pfeilschaft (15, 16) mit länger werdendem Pfeilschaft in dem Energieschlauch (6, 7) die Richtung der Energieübertragung angezeigt wird.

20. Verfahren zur Anzeige in einem Kraftfahrzeug nach einem der Ansprüche 17 bis 19,
**dadurch gekennzeichnet, dass** der von der Energiequelle (2, 3, 4) zur Energiesenke (4, 5) verlaufende Energiepfeil mit Pfeilschaft (15, 16) nach Erreichen der Energiesenke (4, 5) ausgeblendet wird.

## Claims

1. Display device (1) in a motor vehicle on which at least one electric machine (3), a device for storing energy (4), in particular electrical energy, an internal combustion engine (2) and driven wheels (5) of the motor vehicle are represented as symbols characterizing the latter, in at least one display mode, wherein operating states (13) are displayed by a representation of the energy transmission (6, 7) between components (2, 3, 4) which output energy and components (4, 5) which absorb energy,
wherein energy transmission paths (6, 7) between the components (2, 3, 4, 5) are represented in an essentially symmetrical arrangement,
**characterized**
**in that** the direction of the energy transmission in the energy transmission path (6, 7) is represented by a plurality of animated arrows (15-17) running from an energy source to an energy sink, and
**in that** the animated arrows (15-17) are assigned a colour depending on the type of the energy source.

2. Display device (1) in a motor vehicle according to Claim 1, **characterized in that** the operating states (13) are an electric motor drive, an internal combustion engine drive, a hybrid operating mode composed of the electric drive and the internal combustion engine drive, recovery of braking energy and/or charging mode of the energy storage means (4).

3. Display device (1) in a motor vehicle according to Claim 1 or 2, **characterized in that** the energy transmission paths (6, 7) between components (2, 3, 4) which output energy and components (4, 5) which absorb energy are represented as transparent energy hoses (6, 7) which are running in parallel.

4. Display device (1) in a motor vehicle according to one of Claims 1 to 3, **characterized in that** the direction of the energy transmission in the transparent energy hose (6, 7) is represented by an energy arrow having an arrow shaft (15, 16) running from an energy source (2, 3, 4) to an energy sink (4, 5), with the arrow shaft becoming longer.

5. Display device (1) in a motor vehicle according to Claim 4, **characterized in that** the energy arrow with an arrow stem (15, 16) is removed from display after the energy sink (4, 5) is reached, and is represented again after a short time with an arrow stem which becomes longer from the energy source (2, 3, 4) to the energy sink (4, 5).

6. Display device (1) in a motor vehicle according to Claim 4 or 5, **characterized in that** the energy arrow with an energy stem (15, 16) is represented in different colours.

7. Display device (1) in a motor vehicle according to one of Claims 1 to 6, **characterized in that** for the operating state (13) of the electric driving the direction of the energy transmission in the transparent energy hose (6, 7) is represented starting from the energy storage means (4) and extending to the vehicle wheels (5) via the electric machine (3).

8. The display device (1) in a motor vehicle according to one of Claims 1 to 7, **characterized in that** for the operating state (13) of internal combustion engine operation (25) the direction of the energy transmission in the transparent energy hose (6) is represented starting from the internal combustion engine (2) and extending to the vehicle wheels (5).

9. Display device (1) in a motor vehicle according to Claim 8, **characterized in that** for the operating state (13) of the internal combustion engine operation (25) the direction of the energy transmission in the transparent energy hose (6, 7) is represented starting from the internal combustion engine (2) and extending to the energy storage means (4) via the electric machine (3).

10. Display device (1) in a motor vehicle according to one of Claims 1 to 7, **characterized in that** for the operating state (13) of an internal combustion engine operation (25) the direction of the energy transmission in the transparent energy hose (6) is represented starting from the internal combustion engine and extending to the vehicle wheels via the electric machine (3).

11. Display device (1) in a motor vehicle according to one of Claims 1 to 10, **characterized in that** for the operating state (13) of the charging operation (45) the direction of the energy transmission in the transparent energy hose (6, 7) is represented starting from the internal combustion engine (2) and extending to the energy storage means (4) via the electric machine (3).

12. Display device (1) in a motor vehicle according to one of Claims 1 to 11, **characterized in that** for the operating state (13) of hybrid operation (30) the direction of the energy transmission in the transparent energy energy hose (6, 7) is represented starting from the internal combustion engine (2) and extending from the energy storage means (4) to the vehicle wheels (5) via the electric machine (3).

13. Display device (1) in a motor vehicle according to one of Claims 1 to 12, **characterized in that** for the operating state (13) of regeneration (35) the direction of the energy transmission in the transparent energy hose (6, 7) is represented starting from the vehicle wheels (5) and extending to the energy storage means (4) via the electric machine (3).

14. Display device (1) in a motor vehicle according to one of Claims 1 to 13, **characterized in that** different colours are assigned to the operating states (13).

15. Display device (1) in a motor vehicle according to one of Claims 1 to 14, **characterized in that** the operating state (13) is represented as lettering.

16. Display device (1) in a motor vehicle according to one of Claims 1 to 15, **characterized in that** the charge state (14) is displayed for the energy storage means (4).

17. Method for operating a display in a motor vehicle, in which at least one electric machine (3), a device for storing energy (4), in particular electrical energy, an internal combustion engine (2) and vehicle wheels (5) of a motor vehicle are represented as symbols characterizing the latter, in at least one display mode (1), by means of which display operating states (13) are assigned, by means of a visualization of the energy transmission between components (2, 3, 4) which output energy and components (4, 5) which absorb energy,
wherein energy transmission paths (6, 7) between the components are represented in an essentially symmetrical arrangement,
**characterized**
**in that** the direction of the energy transmission in the energy transmission path (6, 7) is represented by a plurality of animated arrows (15-17) running from an energy source to an energy sink, and
**in that** the animated arrows (15-17) are assigned a colour depending on the type of energy source.

18. Method for operating a display in a motor vehicle according to Claim 17,
**characterized in that**
the energy transmission paths (6, 7) between components (2, 3, 4) which output energy and components (4, 5) which absorb energy are represented as transparent energy hoses (6, 7) which are running in parallel.

19. Method for operating a display in a motor vehicle according to Claim 17 or 18,
**characterized in that**
the direction of the energy transmission in the energy hose (6, 7) is displayed by an energy arrow having an arrow shaft (15, 16) running from an energy source (2, 3, 4) to an energy sink (4, 5), with the arrow shaft becoming longer.

20. Method for operating a display in a motor vehicle according to one of Claims 17 to 19,
**characterized in that** the energy arrow running from the energy source (2, 3, 4) to the energy sink (4, 5) and having the arrow stem (15, 16) is removed from display after the energy sink (4, 5) is reached.

## Revendications

1. Dispositif d'affichage (1) placé dans un véhicule automobile, sur lequel sont représentés au moins un moteur électrique (3), un dispositif d'accumulation d'énergie (4), notamment d'énergie électrique, un moteur à combustion interne (2) et les roues motrices (5) du véhicule automobile comme symboles caractéristiques dans au moins un mode d'affichage ;
les états de fonctionnement (13) étant affichés par une représentation de la transmission d'énergie (6, 7) entre les composants restituant de l'énergie (2, 3, 4) et ceux absorbant de l'énergie (4, 5) ;
les voies de transmission d'énergie (6, 7) entre les composants (2, 3, 4, 5) étant représentées selon un agencement pour l'essentiel symétrique ;
**caractérisé en ce que** :
la direction de la transmission d'énergie dans la voie de transmission d'énergie (6, 7) est représentée par plusieurs flèches (15 à 17) animées s'étendant d'une source d'énergie vers une cuvette d'absorption d'énergie ; et
une couleur est associée aux flèches (15 à 17) animées en fonction du type de source d'énergie.

2. Dispositif d'affichage (1) placé dans un véhicule automobile selon la revendication 1, **caractérisé en ce que** les états de fonctionnement (13) sont un entraînement par moteur électrique, un entraînement par moteur à combustion interne, un mode hybride composé d'un entraînement par moteur électrique et d'un entraînement par moteur à combustion interne, d'une récupération de l'énergie de freinage et/ou d'un mode de charge de l'accumulateur d'énergie (4).

3. Dispositif d'affichage (1) placé dans un véhicule automobile selon la revendication 1 ou 2, **caractérisé en ce que** les voies de transmission d'énergie (6, 7) entre les composants restituant de l'énergie (2, 3, 4) et ceux absorbant de l'énergie (4, 5) sont représentées sous la forme de tuyaux flexibles de transport d'énergie (6, 7) transparents s'étendant parallèlement.

4. Dispositif d'affichage (1) placé dans un véhicule automobile selon l'une quelconque des revendications 1 à 3, **caractérisé en ce que** la direction de la transmission d'énergie est représentée par une flèche d'énergie dotée d'un corps de flèche (15, 16) s'étendant d'une source d'énergie (2, 3, 4) vers une cuvette d'absorption d'énergie (4, 5), le corps de flèche devenant de plus en plus long dans le tuyau flexible de transport d'énergie (6, 7) transparent.

5. Dispositif d'affichage (1) placé dans un véhicule automobile selon la revendication 4, **caractérisé en ce que** la flèche d'énergie dotée d'un corps de flèche (15, 16) est masquée une fois la cuvette d'absorption d'énergie (4, 5) atteinte et qu'elle est à nouveau représentée après un temps court de la source d'énergie (2, 3, 4) vers la cuvette d'absorption d'énergie (4, 5) avec un corps de flèche devenant de plus en plus long.

6. Dispositif d'affichage (1) placé dans un véhicule automobile selon la revendication 4 ou 5, **caractérisé en ce que** la flèche d'énergie dotée d'un corps de flèche (15, 16) est représentée de différentes couleurs.

7. Dispositif d'affichage (1) placé dans un véhicule automobile selon l'une quelconque des revendications 1 à 6, **caractérisé en ce que** dans l'état de fonctionnement (13) utilisant la conduite électrique, la direction de la transmission d'énergie dans le tuyau flexible de transport d'énergie (6, 7) transparent est représentée de l'accumulateur d'énergie (4) aux roues du véhicule (5) en passant par le moteur électrique (3).

8. Dispositif d'affichage (1) placé dans un véhicule automobile selon l'une quelconque des revendications 1 à 7, **caractérisé en ce que** dans l'état de fonctionnement (13) utilisant le moteur à combustion interne (25), la direction de la transmission d'énergie dans le tuyau flexible de transport d'énergie (6) transparent est représentée du moteur à combustion interne (2) aux roues du véhicule (5).

9. Dispositif d'affichage (1) placé dans un véhicule automobile selon la revendication 8, **caractérisé en ce que** dans l'état de fonctionnement (13) utilisant le moteur à combustion interne (25), la direction de la transmission d'énergie dans le tuyau flexible de transport d'énergie (6, 7) transparent est représentée du moteur à combustion interne (2) vers l'accumulateur d'énergie (4) via le moteur électrique (3).

10. Dispositif d'affichage (1) placé dans un véhicule automobile selon l'une quelconque des revendications 1 à 7, **caractérisé en ce que** dans l'état de fonctionnement (13) utilisant le moteur à combustion interne (25), la direction de la transmission d'énergie dans le tuyau flexible de transport d'énergie (6) transparent est représentée du moteur à combustion interne vers les roues de véhicule via le moteur électrique (3).

11. Dispositif d'affichage (1) placé dans un véhicule automobile selon l'une quelconque des revendications 1 à 10, **caractérisé en ce que** dans l'état de fonctionnement (13) en mode de charge (45), la direction de la transmission d'énergie dans le tuyau flexible de transport d'énergie (6, 7) transparent est représentée du moteur à combustion interne (2) vers l'accumulateur d'énergie (4) via le moteur électrique (3).

12. Dispositif d'affichage (1) placé dans un véhicule automobile selon l'une quelconque des revendications 1 à 11, **caractérisé en ce que** dans l'état de fonctionnement (13) utilisant le mode hybride (30), la direction de la transmission d'énergie dans le tuyau flexible de transport d'énergie (6, 7) transparent est représentée du moteur à combustion interne (2) et de l'accumulateur d'énergie (4) vers les roues de véhicule (5) via le moteur électrique (3).

13. Dispositif d'affichage (1) placé dans un véhicule automobile selon l'une quelconque des revendications 1 à 12, **caractérisé en ce que** dans l'état de fonctionnement (13) de récupération (35), la direction de la transmission d'énergie dans le tuyau flexible de transport d'énergie (6, 7) transparent est représentée des roues du véhicule (5) vers l'accumulateur d'énergie (4) via le moteur électrique (3).

14. Dispositif d'affichage (1) placé dans un véhicule automobile selon l'une quelconque des revendications 1 à 13, **caractérisé en ce que** des couleurs différentes sont associées aux états de fonctionnement (13).

15. Dispositif d'affichage (1) placé dans un véhicule automobile selon l'une quelconque des revendications 1 à 14, **caractérisé en ce que** l'état de fonctionnement (13) est représenté sous la forme d'une écriture.

16. Dispositif d'affichage (1) placé dans un véhicule automobile selon l'une quelconque des revendications 1 à 15, **caractérisé en ce que** l'état de charge (14) de l'accumulateur d'énergie (4) est affiché.

17. Procédé d'affichage placé dans un véhicule automobile, au moins un moteur électrique (3), un dispositif d'accumulation d'énergie (4), notamment d'énergie électrique, un moteur à combustion interne (2) et les roues du véhicule (5) d'un véhicule automobile étant représentés sous la forme de symboles caractéristiques dans au moins un mode d'affichage (1), des états de fonctionnement (13) étant associés auxdits symboles permettant de visualiser la transmission d'énergie entre les composants (4, 5) restituant de l'énergie (2, 3, 4) et ceux absorbant de l'énergie ; les voies de transmission d'énergie (6, 7) entre les composants étant représentées selon un agencement pour l'essentiel symétrique ;
**caractérisé en ce que** :
la direction de la transmission d'énergie dans la voie de transmission d'énergie (6, 7) est représentée par plusieurs flèches (15 à 17) animées s'étendant d'une source d'énergie vers une cuvette d'absorption d'énergie ; et
une couleur est associée aux flèches (15 à 17) animées en fonction du type de source d'énergie.

18. Procédé d'affichage placé dans un véhicule automobile selon la revendication 17, **caractérisé en ce que** les voies de transmission d'énergie (6, 7) entre les composants (4, 5) restituant de l'énergie (2, 3, 4) et ceux absorbant de l'énergie sont représentées par des tuyaux flexibles de transport d'énergie (6, 7) transparents s'étendant parallèlement.

19. Procédé d'affichage placé dans un véhicule automobile selon la revendication 17 ou 18, **caractérisé en ce que** la direction de la transmission d'énergie est représentée par une flèche d'énergie dotée d'un corps de flèche (15, 16) s'étendant d'une source d'énergie (2, 3, 4) vers une cuvette d'absorption d'énergie (4, 5), le corps de flèche devenant de plus en plus long dans le tuyau flexible de transport d'énergie (6, 7) transparent.

20. Procédé d'affichage placé dans un véhicule automobile selon l'une quelconque des revendications 17 à 19, **caractérisé en ce que** la flèche d'énergie dotée d'un corps de flèche (15, 16) s'étendant de la source d'énergie (2, 3, 4) vers la cuvette d'absorption d'énergie (4, 5) est masquée une fois la cuvette d'absorption d'énergie (4, 5) atteinte.
